# EUROPEAN PATENT SPECIFICATION

(11) **EP 2 356 805 B1**
(45) Date of publication and mention of the grant of the patent: **10.01.2018**
(21) Application number: 09752827.7
(22) Date of filing: 17.11.2009
(51) Int. Cl.: H04M 1/725, H04L 29/08, H04W 8/24

(54) **METHOD AND SYSTEM FOR SERVICE MANAGEMENT OF MOBILE STATIONS**
VERFAHREN UND SYSTEM FÜR SERVICE-MANAGEMENT DER BEWEGLICHEN STATIONEN
MÉTHODE ET SYSTÈME POUR LA GESTION DE SERVICE DES STATIONS MOBILES

(30) Priority: 24.11.2008 SE 0802463
(43) Date of publication of application: 17.08.2011
(73) Proprietor: Giesecke+Devrient Mobile Security GmbH, 81677 München (DE)
(72) Inventor: THORSTENSSON, Pär, S-11328 Stockholm (SE)
(86) International application number: PCT/EP2009/065291
(87) International publication number: WO 2010/057876

(56) References cited:
- EP-A2- 1 519 600
- WO-A1-2005/094097
- US-A1- 2005 193 098
- US-A1- 2006 143 324

## Description

### TECHNICAL FIELD

The invention is concerned with a method and a system in a mobile telecommunication network for management of services used by mobile terminals.

### BACKGROUND ART

The Global System for Mobile Communication (GSM) is a standard for digital wireless communications with different services, such as voice telephony. GSM includes e.g. General Packet Radio System (GPRS) and Universal Mobile Telecommunications Service (UMTS).

The functional architecture of a GSM system can be broadly divided into the Mobile Station, the Base Station Subsystem, and the Network Subsystem. The subscriber carries the mobile station, the base station subsystem controls the radio link with the mobile station and the network subsystem performs the switching of calls between mobile users and mobile users and fixed network users.

The Mobile Station (MS) is the equipment the GSM user sees from the whole system. It actually consists of two distinct entities.

The actual hardware is the Mobile Equipment (ME), i.e. the "terminal" or the "handset", which consists of the physical equipment, such as the radio transceiver, display and digital signal processors. The mobile equipment is identified by the International Mobile Equipment Identity (IMEI), a unique code that corresponds to a specific GSM terminal.

The subscriber information is stored in the Subscriber Identity Module (SIM), implemented as a Smart Card. The SIM card is a smart card that saves subscriber information about identity, subscription, subscriber environment, radio environment and other information.

The SIM card contains the International Mobile Subscriber Identity (IMSI), identifying the subscriber, a secret key for authentication, and other user information.

The Subscriber Identity Module (SIM) inside GSM phones was originally designed as a secure way to connect individual subscribers to the network but is nowadays becoming a standardized and secure application platform for GSM and next generation networks.

UMTS is the next (3^{rd}) generation mobile communication system, which provides an enhanced range of multimedia services, such as video. UMTS has specified the use of the USIM (universal SIM) as the evolution of SIM. In GSM and UMTS networks, the (U)SIM card is central both for subscriber identification and for providing value added services to users. Usually referred to as a SIM card, the USIM (Universal Subscriber Identity Module) is the user subscription to the UMTS mobile network. The USIM contains relevant information that enables access onto the subscribed operator's network.

*SIM applications* or *SIM services* can be downloaded to a mobile station Over-The-Air (OTA). Such applications can perform actions towards the terminal, e.g. displaying a text on the terminal or launching its web browser, through the interface between the SIM and the terminal, the *SIM (application) toolkit* (commonly referred to as SAT). The interface is specified in *GSM specification 11.14 standard 1995 for GSM 2G networks.* Different terminal models support the *11.14 specification* to different extent.

SAT is a standard of the GSM system which enables the SIM to initiate actions which can be used for various Value Added Services (VAS).

The SIM Application Toolkit consists of a set of commands programmed into the SIM card which define how the SIM should interact directly with the outside world and initiates commands independently of the handset and the network. This enables the SIM to build up an interactive exchange between a network application and the end user and access or control access to the network. The SIM also gives commands to the handset, such as display menu and ask for user input.

SAT has been deployed by many mobile operators around the world for many applications, often where a menu-based approach is required, such as Mobile Banking and content browsing. Designed as a single application environment, SAT can be started at the initial power up of the SIM card and is especially suited to low level applications with simple user interfaces.

A value-added service (VAS) is a telecommunications term for, in short, all services beyond standard voice calls and fax transmissions. On a conceptual level, value-added services *add value* to the standard service offering, spurring the subscriber to use their phone more and allowing the operator to drive up their average revenue per unit.

Value-added services are supplied either in-house by the mobile network operator themselves or by a third-party value-added service provider (VASP), also known as a content provider (CP). VASPs typically connecting either directly to the short message service centre (SMSC) or, increasingly, to a messaging gateway that allows the operator to control and charge of the content better.

Theoretically, a SIM application can perform any command specified in 11.14 towards the terminal. In reality, however, the SIM card having the application has to be inserted in such a terminal that supports the commands in question.

Services to be downloaded to a SIM card may include terminal operation commands. The SIM service system, however, has no knowledge of whether the commands will be supported by the terminal the SIM is inserted in, and therefore there is the risk for downloading non-functional (or at least not fully-functional) services to the SIM card. A prior art solution is to build a terminal support control into each SIM application so that it takes one execution path if the terminal has support for a certain command of a downloaded service and another path if it has not. In US2005/0193098 and EP 1519 600 content is delivered to mobile stations. WO 2005/094097 presents a solution to direct messages to the right hardware when a subscriber has many devices. US2006/014332 discloses downloading of an application program including only modules conforming with a request source from a server. The invention is defined by the method of claim 1 and the service system according to claim 12, with various embodiments as defined on the dependent claims. Preferably, the mobile telecommunication network is The Global System for Mobile Communication (GSM) and the module in the mobile station is the Subscriber Identity Module (SIM). Then, the interface between the SIM and the terminal through which the application uses the services is the SIM Application Toolkit (SAT).

In the invention, it is not necessary to build up a terminal command support control into each SIM application, since the server side has this knowledge. With a "device aware" service system, a SIM service will be installed only on SIM cards residing in terminal models with support for all the SAT commands contained in the specific service.

Thus, the invention ensures that is the SIM service system has knowledge about *which* or *what kind* of terminal the SIM is currently residing in and its capabilities in terms of SIM toolkit support. To be able to determine which services that will function on a certain SIM, the SIM service system has to have knowledge about:
1. What terminal model the SIM is currently inserted in.
2. The SAT support for that specific terminal.
3. The SAT commands used in the service to be used.

Information about the current terminal model recited in the SIM can be acquired in e.g. the following ways:
1. It can be queried from the SIM service system's terminal history database.
2. It can be queried from the SIM at the time of download.
3. By means of input from the SIM/terminal user at the time of download.

The first alternative can be used if the SIM service system has access to a subscriber database that keeps track of which terminal model a subscriber is using. The information can then be retrieved from there. In this scenario, the system connects to this subscriber database.

The second way of acquiring knowledge of what terminal model the SIM is currently residing in can be performed through SAT command *providelocalinformation.* The SIM service system can have the SIM execute the command and submit the command execution output back to the system. The output contains the terminal's *IMEI,* which is a unique identifier for the terminal model. Existence of a mapping between IMEI numbers and terminal models in the SIM service system's database is thus a requirement for this option.

In accordance with the third alternative way, the terminal owner can be asked to input the terminal model, e.g. by selecting from drop-down lists of vendors and models when requesting the service. This is, however, not an alternative for use cases without user interaction, e.g. automatic SIM service downloads.

Information about the terminal's SAT support can be
1. retrieved from a repository or
2. fetched from the client when downloading the service.

The first alternative can be used If the SIM service system is connected to a database that holds information of terminal models' SAT support. Then the information can be retrieved from there.

It is also possible, in accordance with the second alternative, to have the SIM "ask" the terminal for its SAT support by executing SAT command *checkterminalprofile.* The response can be submitted back to the SIM service system. It is important to realize that there might be a difference between the SAT support the terminal claims to have in the *checkterminalprofile* response and the terminal's actual support.

The SIM service system has to keep track of the services' SAT command usage. Each service's required SAT support can for instance be specified at time of service definition, or the required support can be inspected by the system.

An operator using a device aware SIM service system can avoid installing not fully functional SIM services on its subscribers' SIM cards, thereby avoiding subscribers having to experience a broken SIM service menu. This is achieved without using complicated client side (SIM) operations and queries, but through intelligent server side logic instead.

The use of a device aware SIM service system enables to have a subscriber base with SIM cards containing SIM service menus adapted to the terminals they reside in. This means that a subscriber changing terminal (e.g. purchasing a new one) might have a potentially non-functional SIM service menu after the device change. The device aware SIM service system should be able to receive a terminal switch event that it can act on, e.g. updating the subscriber's SIM menu with services working with the new terminal model.

In the following, the invention will be described by referring to some embodiments of the invention to the details of which the invention is not restricted.

### FIGURES

Figure 1 is an architecture view of the environment, in which the invention is implemented
Figure 2 presents a flow scheme of a first embodiment of the invention
Figure 3 presents a flow scheme of a second embodiment of the invention

### DETAILED DESCRIPTION

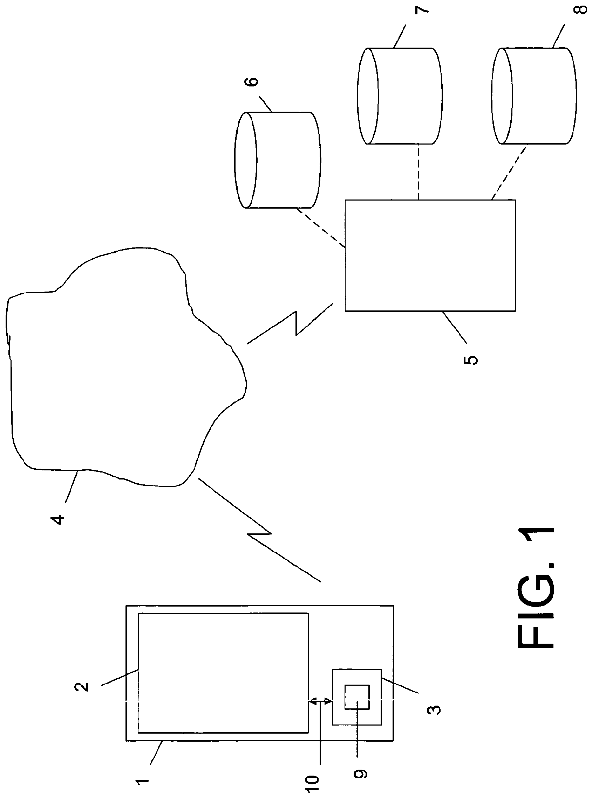

Figure 1 is an architecture view of the environment, in which the invention is implemented. A service system 5 offers and manages services for mobile stations 1 (only one shown) in a mobile telecommunication network 4.

The mobile stations 1 consist of two distinct entity parts. The terminal part 2 consists of the physical equipment, such as the radio transceiver, display and digital signal processors. A module 3 in the mobile station 1 holds subscriber information about identity, subscription, subscriber environment, radio environment and other information.

When the mobile network is The Global System for Mobile Communication (GSM), as it is assumed to be in the example of figure 1, the module is called the Subscriber Identity Module (SIM), which is implemented as a Smart Card

There is also a service application 9 in said module 3, which performs actions towards the terminal 2, e.g. displays a text on the terminal or launches its web browser, through an interface between the module 3 and the terminal 2. In GSM, this interface can be the *SIM (application) toolkit* 10.

The inventive part of the system is that the system 5 comprises software means for checking the capabilities of the terminal 2 of a mobile station 1 requesting a service from the service system 5, and means for selecting a service functioning in the terminal 2 with respect to the checked capabilities.

For the service system 5 to be able to check what terminal model a given subscriber has, it has access to a database 6 that keeps track of which terminal model a subscriber is using, and the information can be retrieved from database 6, called terminal database in this text.

Another way of acquiring knowledge of what terminal model the SIM is currently residing in could be to ask the subscriber about it.

If the SIM service system 5 is connected to a database 7 that holds information about terminal models' capabilities regarding support for SAT commands, the information about commands supported by subscriber's terminal model can be retrieved from here. In this text, database 7 is called the capabilities database.

If the SIM service system 5 is connected to a database 8 that holds information of the SAT support needed for the use of given services, the information about commands needed in the interaction can be retrieved from here. In this text, database 8 is called the service database.

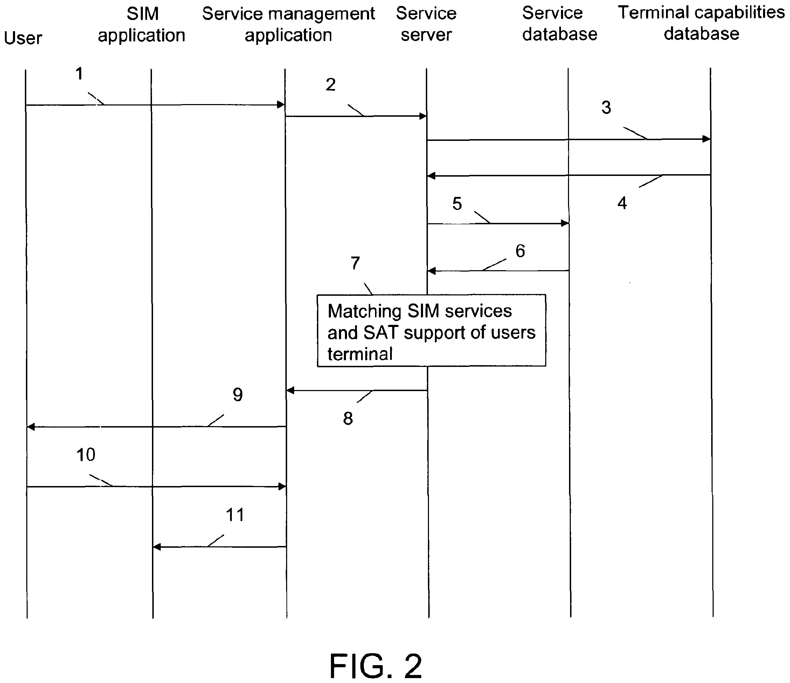

Figure 2 presents a flow scheme of a first embodiment of the invention. It is assumed that this embodiment takes place in the environment in accordance with figure 1 having the mobile station 1, the terminal part 2, a subscriber identity module 3, the service application 9 in said module 3, which performs actions towards the terminal 2 through the *SIM (application) toolkit* 10 interface between the module 3 and the terminal 2. The network 4 is assumed to be the GSM. Furthermore, this embodiment makes use of the terminal capabilities database 7 and the service database 8.

Now, a user wants to use service and therefore logs in to an internet web page constituting an interface for a service management application hold by a service system. The log in is represented by signal 1 in figure 2. Signal 1 also contains information about the terminal model used by the user.

Signal 2 is a query to the service system's server, wherein the web application asks the service system for available services that could be used by the users' terminal model.

The service system needs to know the SAT support of the user's terminal model and asks for this information in signal 3 from the terminal capabilities database. The information is given in signal 4.

The service system then checks in signal 5 from the service database (described in figure 1) what SAT support is needed in the given service required by the user, i.e. the service system checks what commands are required in said service. Signal 6 gives the service system the required information by telling the required commands.

In step 7, the service system matches the SAT support of the user's terminal model with the SIM services (services that can be used by the SIM through the SIM Application Toolkit SAT interface) and selects those services that can be used.

In signals 8 and 9, the service system informs by displaying the available services selected through the web application of service management to the user (indicated by an arrow 9).

In step 10, the user uses the web application to selects a service to be installed to the SIM card of the user's mobile station (signal 11). The user can now use the service.

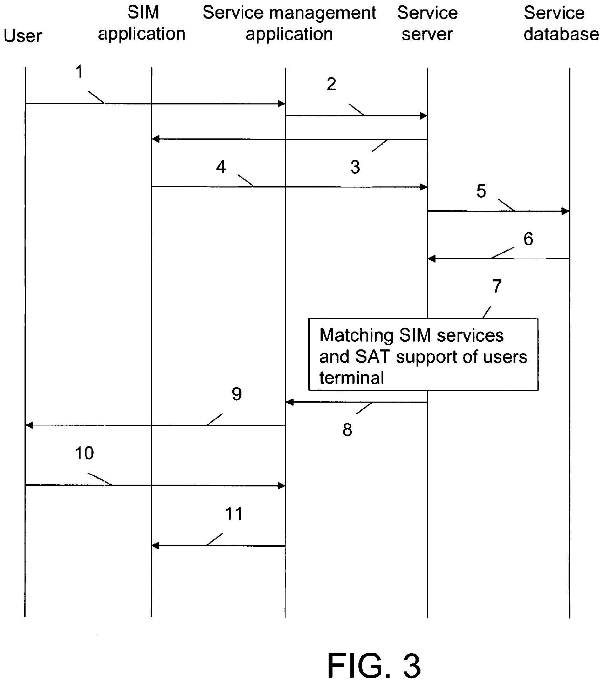

Figure 3 presents a flow scheme of a second embodiment of the invention. It is assumed that this embodiment takes place in the environment in accordance with figure 1 having the mobile station 1, the terminal part 2, a subscriber identity module 3, the service application 9 in said module 3, which performs actions towards the terminal 2 through the *SIM (application) toolkit* 10 interface between the module 3 and the terminal 2. The network 4 is assumed to be the GSM. Furthermore, this embodiment makes use of the service database 8.

Now, a user wants to use services and therefore logs in to an internet web page constituting an interface for a service management application hold by a service system. The log in is represented by signal 1 in figure 3.

Signal 2 is a query to the service system's server, wherein the web application asks the service system for available services that could be used by the users' terminal model informed in signal 1

The service system then queries in signal 3 by means of the checkterminalprofile SAT command from the users SIM application what SAT support (what terminal capabilities) the user's terminal has. The SIM application asks the terminal for its SAT support by executing SAT command *checkterminalprofile* (not shown) and gives this information in signal 4 to the service system.

The service system then checks in signal 5 from the service database (described in figure 1) what of what SAT support is needed in the given service required by the user, i.e. the service system checks what commands are required in said service. Signal 6 gives the service system the required information by telling the required commands.

In step 7, the service system matches the SAT support of the user's terminal model with the SIM services (services that can be used by the SIM through the SIM Application Toolkit SAT interface) and selects those services that can be used by the user's terminal.

In signals 8 and 9, the service system informs the available services selected through the web application of service management to the user by i (indicated by an arrow 9).

In step 10, the user uses the web application to selects a service to be installed to the SIM card of the user's mobile station (signal 11). The user can now use the service.

## Claims

1. Method in a mobile telecommunication network (4), the method comprising the steps of
a) a mobile station (1) requesting a service from a service system (5) in the network (4),
b) the service system (5) checking the capabilities of the terminal (2) of the mobile station (1) by retrieving the terminal capabilities from a database (7) and by mapping them against the terminal model of the mobile station (1) after having received information about the model,
c) the service system (5) selecting a service , that is adapted to function in the terminal with respect to the checked capabilities of the terminal (2), and
d) the mobile station (1) downloading the selected service,
the method comprising managing services used by a service application in a module (3) of the mobile station (1), said managing being performed through an interface (10) between the module (3) and the terminal (2) of the mobile station (1), said interface being a Subscriber Identity Module, SIM, application toolkit, SAT, **characterized in that** the terminal capabilities to be checked consist of commands supported by the terminal (2) for performing actions,
**in that** in the step of checking, the service system (5) checks the commands in a service database (8), and
**in that** the selected service is downloaded to the module (3) of the mobile station.

2. Method of claim 1, wherein in step b), the service system (5) checks the terminal model of the mobile station (1) by sending a query to an application in the module (3) containing information about the terminal (2) used in the mobile station (1).

3. Method of claim 2, wherein in step b), the service system (5) checks the terminal model of the mobile station (1) by sending a query to an application in the module (3), which retrieves the information from the terminal (2).

4. Method of claim 3, wherein the module (3) retrieves the model information from the terminal (2) by means of a command executed by the application in the module (3) to the terminal (2) resulting in the information from the terminal (2) containing a unique equipment information identifier and by then mapping said identifier against the terminal capabilities by means of a capabilities database (7) connected to the service system.

5. Method of claim 1, wherein in step b), the service system (5) checks the model of the terminal (2) of the mobile station (1) by means of information sent from the mobile station (1).

6. Method of claim 1, wherein in step b), the service system (5) checks the model of the terminal (2) of the mobile station (1) by retrieving it from a terminal database (6).

7. Method of claim 1, wherein in step b), the service system (5) fetches the terminal capabilities from the mobile station (1).

8. Method of claim 1, wherein in step b), the service system (5) asks the terminal capabilities from the module (3).

9. Method of any of claims 1 - 8, wherein the mobile telecommunication network (4) is the GSM, the module (3) in the mobile station is the Subscriber Identity Module SIM, and the application in the module (3) is a SIM application

10. Method of any of claims 4 and 9, wherein the module (3) retrieves the model information from the terminal (2) through the SIM application Toolkit making use of the SAT command *providelocalinformation* to retrieve the unique identifier from the terminal (2), which consists of the Mobile Equipment Identity (IMEI) being a unique code that corresponds to a specific terminal (2).

11. Method of claim 9, wherein the service system requests the terminal capabilities from the module (3) by instructing the SIM to retrieve the information from the terminal (2) through the SIM application Toolkit making use of the SAT command *checkterminalprofile* to retrieve the SAT commands supported by the terminal (2).

12. Service system (5) adapted to overate in a mobile telecommunication network (4), the service system comprising:
means for checking the capabilities of a terminal (2) of a mobile station (1) requesting a service from the service system (5), and
means for selecting a service being functional with respect to the checked capabilities of the terminal (2),
the service system being adapted for managing of services used by a service application in a module (3) module (3) of the mobile station (1) through an interface between the module (3) and the terminal (2) of the mobile station (1), the service system being **characterized in that** the terminal capabilities to be checked consist of commands supported by the terminal (2) through the interface, **in that** the means for checking the capabilities of the terminal (2) are adapted,
within said checking, to check the commands in a service database (8) containing information about commands used by different services to be downloaded to the module (3) of the mobile station (1) and **in that** the service system is adapted to download the selected service to the module (3) of the mobile station (1).

13. Service system (5) of claim 12, wherein the means for checking the capabilities of the terminal (2) are adapted, within said checking, to check the terminal model of the mobile station (1) by sending a query to an application in the module (3) containing information about the terminal (2) used in the mobile station (1).

14. System (5) of claim 12 or 13, wherein the means for checking the capabilities of the terminal (2) are adapted, within said checking, to access a capabilities database (7) containing information about the capabilities of the terminal used.

15. System (5) of claim 14, wherein said capabilities database (7) contains a mapping between the unique equipment information identifier of the terminal (2) used and the existing terminal model.

16. Service system (5) of any of claims 12-15, wherein the mobile telecommunication network (4) is The Global System for Mobile Communication (GSM) and the module (3) in the mobile station (1) is the Subscriber Identity Module (SIM).

17. Service system (5) of claim 16, wherein the interface between the SIM (3) and the terminal (2) through which the application uses the services is the SIM Application Toolkit (SAT).

18. Service system (5) of claim 17, wherein the service system (5) is adapted to get information about the terminal (2) through the standardized *providelocalinformation* SAT command.

19. Service system (5) of 17, wherein the means for checking the capabilities of the terminal (2) are adapted, within said checking, to get from the capabilities database (7) information about the capabilities of the terminal to support SAT commands by instructing the SIM to execute the standardized *checkterminalprofile* SAT command and and to send the information further to the service system (5).

## Patentansprüche

1. Verfahren in einem mobilen Telekommunikationsnetzwerk (4), wobei das Verfahren die Schritte umfasst, dass
a) eine Mobilstation (1) einen Dienst von einem Dienstsystem (5) in dem Netzwerk (4) abfragt,
b) das Dienstsystem (5) die Fähigkeiten des Endgeräts (2) der Mobilstation (1) durch Abrufen der Endgerätefähigkeiten von einer Datenbank (7) und Abbilden derselben gegen das Endgerätemodell der Mobilstation (1), nachdem Informationen über das Model empfangen worden sind, prüft,
c) das Dienstsystem (5) einen Dienst auswählt, der angepasst ist, in dem Endgerät bezüglich der geprüften Fähigkeiten des Endgeräts (2) zu funktionieren, und
d) die Mobilstation (1) den ausgewählten Dienst herunterlädt,
wobei das Verfahren das Handhaben von Diensten umfasst, die von einer Dienstanwendung in einem Modul (3) der Mobilstation (1) verwendet werden, wobei das Handhaben von einer Schnittstelle (10) zwischen dem Modul (3) und dem Endgerät (2) der Mobilstation (1) durchgeführt wird, wobei die Schnittstelle ein Teilnehmer-Identitätsmodul ("Subscriber Identity Module"), SIM-Anwendungs-Toolkit, SAT, ist,
**dadurch gekennzeichnet, dass** die zu prüfenden Endgerätefähigkeiten aus Befehlen bestehen, die von dem Endgerät (2) zum Durchführen von Aktionen unterstützt werden,
**dadurch, dass** im Schritt des Prüfens das Dienstsystem (5) die Befehle in einer Dienstdatenbank (8) prüft, und
**dadurch, dass** der ausgewählte Dienst auf das Modul (3) der Mobilstation heruntergeladen wird.

2. Verfahren nach Anspruch 1, wobei in Schritt b) das Dienstsystem (5) das Endgerätemodell der Mobilstation (1) durch Senden einer Abfrage an eine Anwendung in dem Modul (3) prüft, die Informationen über das in der Mobilstation (1) verwendete Endgerät (2) enthält.

3. Verfahren nach Anspruch 2, wobei in Schritt b) das Dienstsystem (5) das Endgerätemodell der Mobilstation (1) durch Senden einer Abfrage an eine Anwendung in dem Modul (3) prüft, welche die Informationen von dem Endgerät (2) abruft.

4. Verfahren nach Anspruch 3, wobei das Modul (3) die Modellinformation von dem Endgerät (2) mittels eines von der Anwendung in dem Modul (3) ausgeführte Befehls an das Endgerät (2) abruft, was in Informationen von dem Terminal (2) resultiert, die einen eindeutigen Geräteinformationsidentifikator enthalten, und durch darauffolgendes Abbilden des Identifikators gegen die Endgerätefähigkeiten mittels einer Fähigkeitendatenbank (7), die mit dem Dienstsystem verbunden ist.

5. Verfahren nach Anspruch 1, wobei in Schritt b) das Dienstsystem (5) das Modell des Endgeräts (2) der Mobilstation (1) mittels der von der Mobilstation (1) gesendeten Informationen prüft.

6. Verfahren nach Anspruch 1, wobei in Schritt b) das Dienstsystem (5) das Modell des Endgeräts (2) der Mobilstation (1) durch Abrufen desselben von einer Endgerätedatenbank (6) prüft.

7. Verfahren nach Anspruch 1, wobei in Schritt b) das Dienstsystem (5) die Endgerätefahigkeiten von der Mobilstation (1) holt.

8. Verfahren nach Anspruch 1, wobei in Schritt b) das Dienstsystem (5) die Endgerätefähigkeiten von dem Modul (3) erfragt.

9. Verfahren nach einem der Ansprüche 1 - 8, wobei das mobile Telekommunikationsnet/werk (4) das GSM ist, das Modul (3) in der Mobilstation das Teilnehmer-Identitätsmodul (..Subscriber Identity Module") SIM ist und die Anwendung in dem Modul (3) eine SIM-Anwendung ist.

10. Verfahren nach einem der Ansprüche 3, 4 und 9, wobei das Modul (3) die Modellinformation von dem Endgerät (2) durch das SIM-Anvendungs-Toolkit abruf. unter Verwendung des SAT-Befehls *providelocalinformation*. um den eindeutigen Identifikator von dem Endgerät (2) abzurufen, welche aus der Mobile Equipment Identity (IMEI) besteht, welche eine eindeutige Kennzahl ist. die zu einem spezifischen Endgerät (2) korrespondiert.

11. Verfahren nach Anspruch 9. wobei das Dienstsystem die Endgerätefähigkeiten von dem Modul (3) durch Anweisen des SIM. die Informationen von dem Endgeräts (2) durch das SIM-Anwendungs-Toolkit unter Verwendung des SAT-Befehls *checkterminalprofile* abzurufen, um die von dem Endgerät (2) unterstützen SAT-Befehle abzurufen, abfragt.

12. Dienstsystem (5), angepasst, in einem mobilen Telekommunikationsnetzwerk (4) zu arbeiten, wobei das Dienstsystem umfasst:
eine Einrichtung zum Prüfen der Fähigkeiten eines Endgeräts (2) einer Mobilstation (1), die einen Dienst von dem Dienstsystem (5) abfragt, und
eine Einrichtung zum Auswählen eines Dienstes, der bezüglich der geprüften Fähigkeiten des Endgeräts (2) funktionsfähig ist,
wobei das Dienstsystem zum Handhaben von Diensten angepasst ist, die von einer Dienstanwendung in einem Modul (3) der Mobilstation (1) verwendet werden, durch eine Schnittstelle zwischen dem Modul (3) und dem Endgerät (2) der Mobilstation (1),
wobei das Dienstsystem **dadurch gekennzeichnet ist, dass** die zu prüfenden Endgerätefähigkeiten aus Befehlen bestehen, die von dem Endgerät (2) durch die Schnittstelle unterstützt werden, dass die Einrichtung zum Prüfen der Fähigkeiten des Endgeräts (2) angepasst ist, beim Prüfen die Befehle in einer Dienstdatenbank (8) zu prüfen, die Informationen über Befehle enthält, die von verschiedenen Diensten verwendet werden, die auf das Modul (3) der Mobilstation (1) herunterzuladen sind, und dass das Dienstsystem angepasst ist, den ausgewählten Dienst auf das Modul (3) der Mobilstation (1) herunterzuladen.

13. Dienstsystem (5) nach Anspruch 12, wobei die Einrichtung zum Prüfen der Fähigkeiten des Endgeräts (2) angepasst ist, beim Prüfen das Endgerätemodell der Mobilstation (1) durch Senden einer Abfrage an eine Anwendung in dem Modul (3) zu prüfen, die Informationen über das in der Mobilstation (1) verwendete Endgerät (2) enthält.

14. Dienstsystem (5) nach Anspruch 12 oder 13, wobei die Einrichtung zum Prüfen der Fähigkeiten des Endgeräts (2) angepasst ist, beim Prüfen auf eine Fähigkeitendatenbank (7) zuzugreifen, die Informationen über die Fähigkeiten des verwendeten Endgeräts enthält.

15. Dienstsystem (5) nach Anspruch 14, wobei die Fähigkeitendatenbank (7) eine Abbildung zwischen dem Geräteinformationsidentifikator des verwendeten Endgeräts (2) und dem existierenden Endgerätemodell enthält.

16. Dienstsystem (5) nach einem der Ansprüche 12 - 15, wobei das mobile Telekommunikationsnetzwerk (4) das "Global System for Mobile Communications" (GSM) und das Modul (3) in der Mobilstation (1) das Teilnehmer-Identitätsmodul (.,Subscriber Identity Module") (SIM) ist.

17. Dienstsystem (5) nach Anspruch 16, wobei die Schnittstelle zwischen dem SIM (3) und dem Endgerät (2), durch welche die Anwendung die Dienste verwendet, das SIM-Anwendungs-Toolkit (SAT) ist.

18. Dienstsystem (5) nach Anspruch 17, wobei das Dienstsystem (5) angepasst ist. Informationen über das Endgerät (2) durch den standardisierten *providelocalinformation* SAT-Befehl zu erhalten.

19. Dienstsystem (5) nach Anspruch 17, wobei die Einrichtung zum Prüfen der Fähigkeiten des Endgeräts (2) angepasst ist, beim Prüfen von der Fähigkeitendatenbank (7) Informationen über die Fähigkeiten des Endgeräts (2) zu erhalten, um SAT-Befehle zu unterstützen durch Anweisen des SIM, den standardisierten *checkterminalprofile* SAT-Befehl auszuführen und die Informationen weiter an das Dienstsystem (5) zu senden.

## Revendications

1. Procédé dans un réseau de télécommunication mobile (4), le procédé comprenant les étapes suivantes :
a) une station mobile (1) demandant un service provenant d'un système de services (5) dans le réseau (4) ;
b) le système de services (5) vérifiant les capacités du terminal (2) de la station mobile (1) en récupérant les capacités de terminal d'une base de données (7) et en les mappant par rapport au modèle de terminal de la station mobile (1) après avoir reçu des informations concernant le modèle ;
c) le système de services (5) sélectionnant un service, qui est apte à fonctionner dans le terminal en ce qui concerne les capacités vérifiées du terminal (2), et
d) la station mobile (1) téléchargeant le service sélectionné,
le procédé comprenant la gestion de services utilisés par une application de service dans un module (3) de la station mobile (1), ladite gestion étant réalisée par le biais d'une interface (10) entre le module (3) et le terminal (2) de la station mobile (1), ladite interface étant une boîte à outils d'application de module SIM (Subscriber Identity Module) (SAT),
**caractérisé en ce que** les capacités de terminal à vérifier consistent en des commandes prises en charge par le terminal (2) pour la réalisation d'actions, **en ce que** dans l'étape de vérification, le système de services (5) vérifie les commandes dans une base de données de services (8), et **en ce que** le service sélectionné est téléchargé vers le module (3) de la station mobile.

2. Procédé selon la revendication 1, dans lequel lors de l'étape b), le système de services (5) vérifie le modèle de terminal de la station mobile (1) en envoyant une requête à une application dans le module (3) contenant des informations concernant le terminal (2) utilisé dans la station mobile (1).

3. Procédé selon la revendication 2, dans lequel lors de l'étape b), le système de services (5) vérifie le modèle de terminal de la station mobile (1) en envoyant une requête à une application dans le module (3), lequel récupère les informations à partir du terminal (2).

4. Procédé selon la revendication 3, dans lequel le module (3) récupère les informations de modèle à partir du terminal (2) au moyen d'une commande exécutée par l'application dans le module (3) vers le terminal (2), avec pour résultat les informations provenant du terminal (2) contenant un identifiant d'informations d'équipement unique, puis en mappant ledit identifiant par rapport aux capacités de terminal à l'aide d'une base de données de capacités (7) connectée au système de services.

5. Procédé selon la revendication 1, dans lequel lors de l'étape b), le système de services (5) vérifie le modèle du terminal (2) de la station mobile (1) à l'aide des informations envoyées à partir de la station mobile (1).

6. Procédé selon la revendication 1, dans lequel lors de l'étape b), le système de services (5) vérifie le modèle du terminal (2) de la station mobile (1) en le récupérant d'une base de données de terminal (6).

7. Procédé selon la revendication 1, dans lequel lors de l'étape b), le système de services (5) extrait les capacités de terminal à partir de la station mobile (1).

8. Procédé selon la revendication 1, dans lequel lors de l'étape b), le système de services (5) demande les capacités de terminal au module (3).

9. Procédé selon l'une quelconque des revendications 1 à 8. dans lequel le réseau de télécommunication mobile (4) est le GSM ; le module (3) dans la station mobile est le module SIM (Subscriber Identity Module), et l'application dans le module (3) est une application SIM.

10. Procédé selon l'une quelconque des revendications 3, 4 et 9, dans lequel le module (3) récupère les informations de modèle à partir du terminal (2) par le biais de la boîte à outils d'application SIM en recourant à la commande *SAT providelocalinformation* pour récupérer l'identifiant unique du terminal (2). lequel consiste en l'identité IMEI (Mobile Equipment Identity) qui est un code unique correspondant à un terminal spécifique (2).

11. Procédé selon la revendication 9, dans lequel le système de services demande les capacités de terminal à partir du module (3) en ordonnant au SIM de récupérer les informations à partir du terminal (2) par le biais de la boîte à outils d'application SIM en recourant à la commande SAT *checkterminalprofile* pour récupérer les commandes SAT prises en charge par le terminal (2).

12. Système de services (5) apte à fonctionner dans un réseau de télécommunication mobile (4). le système de services comprenant:
un moyen pour vérifier les capacités d'un terminal (2) d'une station mobile (1) demandant un service provenant du système de services (5). et
un moyen pour sélectionneur un service fonctionnel quant aux capacités vérifiées du terminal (2).
le système de services étant apte à gérer des services utilisés par une application de service dans un module (3) de la station mobile (1) par le biais d'une interface entre le module (3) et le terminal (2) de la station mobile (1), le système de services étant **caractérisé en ce que** les capacités de terminal à vérifier consistent en des commandes prises en charge par le terminal (2) par le biais de l'interface, **en ce que** le moyen de vérification des capacités du terminal (2) est apte, grâce à ladite vérification, à vérifier les commandes dans une base de données de services (8) contenant des informations sur les commandes utilisées par différents services à télécharger vers le module (3) de la station mobile (1), et **en ce que** le système de services est apte à télécharger le service sélectionné vers le module (3) de la station mobile (1).

13. Système de services (5) selon la revendication 12, dans lequel le moyen de vérification des capacités du terminal (2) est apte, grâce à ladite vérification, à vérifier le modèle de terminal de la station mobile (1) en envoyant une requête à une application dans le module (3) contenant des informations concernant le terminal (2) utilisé dans la station mobile (1).

14. Système (5) selon la revendication 12 ou 13, dans lequel le moyen de vérification des capacités du terminal (2) est apte, grâce à ladite vérification, à accéder à une base de données de capacités (7) contenant des informations concernant les capacités du terminal utilisé.

15. Système (5) selon la revendication 14, dans lequel ladite base de données de capacités (7) contient un mappage entre l'identifiant d'informations d'équipement unique du terminal (2) utilisé et le modèle de terminal existant.

16. Système de services (5) selon l'une quelconque des revendications 12 à 15, dans lequel le réseau de télécommunication mobile (4) est le système mondial de communication mobile (Global System for Mobile Communication, GSM), et le module (3) dans la station mobile (1) est le module SIM (Subscriber Identity Module).

17. Système de services (5) selon la revendication 16, dans lequel l'interface entre le SIM (3) et le terminal (2), par le biais de laquelle l'application utilise les services, est la boîte à outils d'application SIM (SAT).

18. Système de services (5) selon la revendication 17, dans lequel le système de services (5) est apte à obtenir des informations concernant le terminal (2) par le biais de la commande SAT *providelocalinformation.*

19. Système de services (5) selon la revendication 17, dans lequel le moyen de vérification des capacités du terminal (2) est apte, grâce à ladite vérification, à obtenir de la base de données de capacités (7) des informations concernant les capacités du terminal pour prendre en charge les commandes SAT en ordonnant au SIM d'exécuter la commande SAT standardisée *checkterminalprofile,* et à envoyer les informations encore au système de services (5).
